(19) Europäisches Patentamt
European Patent Office
Office européen des brevets

(11) **EP 1 136 806 B1**

(12) **EUROPÄISCHE PATENTSCHRIFT**

(45) Veröffentlichungstag und Bekanntmachung des Hinweises auf die Patenterteilung:
**18.07.2007 Patentblatt 2007/29**

(51) Int Cl.:
*G01M 11/02* (2006.01)　　*G01M 11/00* (2006.01)

(21) Anmeldenummer: **01102453.6**

(22) Anmeldetag: **03.02.2001**

(54) **Vorrichtung und Verfahren zur ortsaufgelösten Brechkraftbestimmung eines optischen Elements**

Device and procedure for a space resolved determination of the refractive power of an optical element

Dispositif et procédé de détermination à résolution spatiale de la puissance de réfraction d'un élément optique

(84) Benannte Vertragsstaaten:
**DE FR GB**

(30) Priorität: **24.03.2000 DE 10014334**

(43) Veröffentlichungstag der Anmeldung:
**26.09.2001 Patentblatt 2001/39**

(73) Patentinhaber: **Carl Zeiss Vision GmbH 73430 Aalen (DE)**

(72) Erfinder:
• **Volkenandt, Harald 73432 Aalen (DE)**
• **Neuhaus, Bruno 73432 Aalen (DE)**

(56) Entgegenhaltungen:
**DE-A- 19 800 844　　US-A- 5 294 971
US-A- 5 825 476　　US-A- 5 896 194**

**Beschreibung**

Die vorliegende Erfindung betrifft eine Vorrichtung und ein Verfahren zur ortsaufgelösten Bestimmung der Brechtkraftverteilung eines optischen Elements.

In der Augenoptik finden in zunehmendem Umfang Gleitsicht - Brillengläser Verwendung. Sie weisen mehrere örtlich verschiedene Flächenbrechwerte auf, wobei der Übergang zwischen den verschiedenen Bereichen kontinuierlich ist. Bei solchen, beispielsweise aus der EP-A-0 039 497 bekannten Linsen weicht zumindest eine ihrer Flächen von der rotationssymmetrischen Gestalt ab.

Für die Qualitätsprüfung dieser asphärischen Linsen erscheint sich das Hartmann-Verfahren praktikabel, da andere Methoden wie beispielsweise mechanische Meßverfahren mit Tastköpfen oder interferometrische Prüfungen zu langsam, zu teuer oder zu justierempfindlich sind.

Bei der Extrafokalmethode von J. Hartmann, entstanden im Jahr 1900, wird dicht vor dem zu prüfenden optischen Element eine Blende mit zwei symmetrisch zur optischen Achse gelegenen kleinen Löchern angebracht. Mit zwei Messungen vor und hinter der Brennebene des optischen Elements bei variierendem Lochabstand lassen sich die Brennweite und die sphärische Aberration bestimmen.

Die Objektivprüfung nach Hartmann ist beispielsweise auch aus DE 3318293 A1 bekannt.

In D. Malacara, Optical Shop Testing, Kap. 10 I. Ghozeil, Hartmann and Other Screen Tests, pp. 323 ff, Wiley New York 1978, ist der Hartmann-Test in Varianten und auch die Auswertetheorie beschrieben.

In OPTICAL ENGENEERING, vol.31, no.7, July 1992, BELLINGHAM, WA, US, pages 1551-1555, XP289274, D.Malacara et al. "Testing and centering of lenses by means of a hartmann test with four holes" wird eine modifizierte und vereinfachte Variante des Hartmann Test beschrieben. Die Lochblende erzeugt dabei nur vier Strahlenbündel. Für die Vermessung von Brillengläsern ist dieser Meßaufbau unbrauchbar, da die Ortsauflösung zu gering ist.

Meßgeräte zur Qualitätsprüfung von Brillengläsern auf Basis des Hartmann Verfahrens sind aus der WO95/34800 (US 5,825,476) bekannt. Mit einer Lochblende oder einem Linsen-Array wird die zu untersuchende Wellenfront in einzelne Strahlbündel zerlegt. Diese erzeugen auf einer Mattscheibe Intensitätspeaks. Über eine verkleinernde Zwischenabbildung wird das Intensitätsmuster beispielsweise mit einer CCD-Kamera aufgenommen. Die Brechkraftverteilung der zu untersuchenden Linse wird mit einer nachfolgenden Recheneinheit aus der Analyse des CCD-Bildes gewonnen. Durch den Einsatz der Mattscheibe wird die Schärfe der von der Lochblende oder dem Linsen-Array erzeugten Intensitätspeaks und die Auswertegenauigkeit verringert. Über die verkleinernde Zwischenabbildung der Mattscheibe auf den Detektor werden zusätzliche Meßfehler eingeführt.

Aus der DE 19800844 A1 ist ein Shack-Hartmann Sensor bekannt, bei welchem ein Zuordnungsproblem, welches entsteht, wenn die Wellenaberrationen zu groß sind, dadurch beseitigt wird, dass ein Linsenarray und eine schaltbare Transparenzmaske in Reihe geschaltet sind.

Die Wellenfrontmessung mit einer Vielzahl verschiedener codierter Anordnungen von Löchern im Strahlengang beschreibt die EP 0 466 881 B1. Die Anforderungen an Stabilität und Justage der fortschaltbaren Lochblende im Strahlengang sind dabei sehr hoch, um aus mehreren Messungen ein übereinstimmendes Meßergebnis zu erzielen. Um die Meßgenauigkeit zu erhöhen, wäre nach jedem Fortschalten der Lochblende eine Kalibrierungsmessung erforderlich. Die Meßanordnung enthält ein fokussierendes optisches System und einen ortsauflösenden Detektor, der in der Nähe der Fokusebene des fokussierenden Systems angeordnet ist. Das fokussierende optische System muß dabei hervorragend korrigiert sein, um keinen negativen Einfluß auf die zu untersuchende Wellenfront auszuüben. Damit wird der optische Aufbau aufwendig und teuer.

Aufgabe der Erfindung ist deshalb, eine Vorrichtung zur ortsaufgelösten Brechkraftmessung eines optischen Elements anzugeben, die einen einfachen Aufbau aufweist, mit der sich bei kurzer Meßzeit höchste Genauigkeit bezüglich der Ortsauflösung realisieren lässt und bei der vermieden wird, dass aufgrund hoher positiver lokaler Brechkraft des zu untersuchenden optischen Elements die einzelnen Intensitätspeaks überlappen.

Gelöst wird diese Aufgabe mit einer Vorrichtung mit den Merkmalen des Anspruchs 1 und einem Verfahren mit den Merkmalen des Anspruchs 16. Vorteilhafte Ausgestaltungen der Erfindung ergeben sich aus den Merkmalen der abhängigen Ansprüche.

Die erfindungsgemäße Vorrichtung umfaßt demnach eine Lichtquelleneinheit, einen Strahlumformer und einen ansteuerbaren Manipulator, einen ortsauflösenden Detektor und eine Recheneinheit. Die Lichtquelleneinheit umfaßt eine Lichtquelle, wie beispielsweise eine LaserLichtquelle oder eine thermische Lampe mit einer vorgeschalteten Lochblende, und reflektive und/oder refraktive Komponenten zur Erzeugung eines ausgedehnten Strahlenbüschels, mit dem das zu untersuchende optische Element beleuchtet wird. Das zu untersuchende optische Element beeinflußt lokal die Ausbreitung des Strahlenbüschels. Diese Beeinflussung ist mit der Kombination von Strahlumformer und Manipulator meßbar.

Der Strahlumformer kann eine erste Lochblende oder ein Linsen-Array sein. Mit diesem Strahlumformer wird eine erste Anzahl von Strahlenbündeln erzeugt. Die Lochblende schneidet aus dem einfallenden Strahlenbüschel entsprechend der Anzahl der Löcher Strahlenbündel aus. Jede Linse eines Linsen-Arrays, gebildet beispielsweise aus Mikrolinsen, fokussiert die einfallenden Strahlen und erzeugt somit ein einzelnes Strahlenbündel. Die Strahlen jedes Strahlenbündels repräsentieren den Bereich des zu untersuchenden optischen Elements, den sie durchlaufen haben. Aus dem Verlauf der einzelnen Strahlenbündel läßt sich deshalb auf die Brechkraftverteilung des zu untersuchenden optischen Elements rückrechnen. Treffen die Strahlenbündel auf den ortsauflösenden Detektor, so erzeugen sie einzelne gaussförmige Intensitätspeaks, deren Schwerpunktslage mit einem nachgeschalteten Auswertealgorithmus in der Recheneinheit bestimmt wird. Mit dem bekannten Generierungs- und Detektionsort eines Strahlenbündels kann die Brechkraftverteilung des zu untersuchenden optischen Elements bestimmt werden. Auswertealgorithmen sind beispielsweise den Veröffentlichungen von Malacara oder den zitierten Schriften zu entnehmen.

Um zu vermeiden, daß aufgrund hoher positiver lokaler Brechkraft des zu untersuchenden optischen Elements die einzelnen Intensitätspeaks überlappen, ist ein Manipulator vorgesehen, der die Anzahl der Strahlbündel reduziert. Dieser Manipulator kann eine austauschbare zweite Lochblende sein. Mit diesem ansteuerbaren Manipulator ist es möglich, die Strahlenbündel so auszuwählen, daß sich die Strahlenbündel aufgrund der lokal variierenden Brechkraftverteilung nicht überschneiden. Die Ansteuerung betrifft bei Verwendung einer Lochblende den Austausch der Lochblende. Mit Hilfe des ansteuerbaren zweiten Manipulators ist es beispielsweise möglich, die gesamte Produktpalette der Brillengläser, im besonderen der Gleitsichtbrillengläser im Bereich $\pm 12$dpt zu qualifizieren.

Die Reihenfolge von Strahlumformer und Manipulator ist durch die Auslegung des Manipulators bestimmt. Es ist möglich, daß der Manipulator vor dem Strahlumformer angebracht ist. Zwischen dem Manipulator und dem Strahlumformer können optische Komponenten wie Spiegel oder Linsen zur vergrößernden oder verkleinernden Abbildung des Manipulators auf den Strahlumformer vorgesehen sein.

Bei Verwendung einer ersten und zweiten Lochblende als Strahlumformer und Manipulator ist es günstig, wenn die beiden Lochblenden unmittelbar aufeinander folgen.

Die Lochanordnung auf der ersten Lochblende ist vorteilhafterweise derart an den Detektor angepaßt, daß jedes von einem Loch der ersten Lochblende ausgehende Strahlenbündel ein auflösbares Signal im Detektor generiert. Es ist vorteilhaft, den minimalen Lochabstand ohne zu untersuchendes optisches Element und ohne Manipulator derart zu bestimmen, daß die maximal mögliche Anzahl von Strahlenbündel räumlich getrennt auf den Detektor trifft.

Soll das optische Element innerhalb eines kreis- oder rechteckförmigen Bereichs untersucht werden, so beträgt der Lochabstand auf der ersten Lochblende höchstens 1/30, vorteilhafterweise 1/50 des Durchmessers des kreisförmigen Bereichs, bzw. der kürzeren Seite des Rechtecks. Vorteilhafte Lochabstände liegen im Bereich zwischen 1mm und 2mm. Die Löcher der ersten Lochblende können auf einem regelmäßigen Gitter, beispielsweise ein Spalten-Zeilen-Gitter oder ein Gitter mit äqidistantem Lochabstand von Loch zu benachbartem Loch angeordnet sein. Eine regelmäßige Anordnung erleichtert die Auswertung. Bei der Qualifizierung von Gleitsichtgläsern mit einem Nah- und einem Fernteil kann es günstig sein, die Lochanordnung an die Brechkraftverteilung anzupassen, beispielsweise indem die Lochdichte innerhalb des Nahteils erhöht ist.

Das zu untersuchende optische Element kann aufgrund seiner Brechkraftverteilung zu Überlagerungen der Intensitätspeaks führen. Deshalb wird mit dem Manipulator die Anzahl der Strahlenbündel reduziert. Die Lochdichte der zweiten Lochblende ist individuell an die Brechkraftverteilung des zu untersuchenden optischen Elements angepaßt. Bei einer sphärischen positiven Linse kann das beispielsweise bedeuten, daß aufgrund der zweiten Lochblende nur jedes zweite (oder jedes dritte) von der ersten Lochblende erzeugte Strahlenbündel den Detektor erreicht. Bei einem Gleitsicht-Brillenglas ist die lokale Lochdichte der zweiten Lochblende vorteilhafterweise an die Brechtkraftverteilung angepaßt und deshalb nicht regelmäßig.

Es ist vorteilhaft, wenn eine große Anzahl von räumlich getrennten Strahlenbündeln auf den Detektor treffen und ausgewertet werden können, um bei hoher Ortsauflösung die Meßzeit zu reduzieren. Idealerweise sind mehr als 100 Strahlenbündel an der Auswertung beteiligt.

Damit die Intensitätspeaks auf dem Detektor einzeln aufgelöst werden können, werden die einzelnen Strahlenbündel vorteilhafterweise durch den Strahlumformer räumlich begrenzt. Jedes Loch der ersten Lochblende schneidet ein kreisförmiges Strahlenbündel aus dem auf die erste Lochblende treffenden Strahlenbüschel heraus. Es ist günstig, die Lochdurchmesser zwischen 0,2mm und 0,3mm zu wählen.

Der Manipulator dient entsprechend obigen Ausführungen der Auswahl und Reduzierung der Strahlenbündel und nicht der Strahlbegrenzung. Ist der Manipulator nach dem Strahlumformer angeordnet, so sind die Strahlenbündel bereits von dem Strahlumformer geformt und werden vom Manipulator durchgelassen oder als Ganzes vignettiert. Ist der Manipulator vor dem Strahlumformer angeordnet, so erzeugt und begrenzt der Manipulator zunächst die Strahlenbündel. Diese weisen jedoch in der Regel noch zu große Durchmesser auf. Der nachfolgende Strahlumformer begrenzt die Strahlenbündel auf den gewünschten Durchmesser.

Bei Verwendung von erster und zweiter Lochblende für Strahlumformer und Manipulator bestimmen die Löcher der ersten Lochblende die Größe der Strahlenbündel. Da die zweite Lochblende nur selektiert, können die Durchmesser der Löcher der zweiten Lochblende größer gewählt werden. Vorteilhafterweise sind sie mindestens doppelt so groß wir die Löcher der ersten Lochblende. Dies hat zum Vorteil, daß die beiden Lochblenden um die Differenz der Lochdurchmesser von erster und zweiter Lochblende gegeneinander verschoben sein können, ohne daß dies einen negativen Einfluß auf das Meßergebnis hat. Gerade beim Wechseln der zweiten Lochblende ist es günstig, wenn die Positioniergenauigkeit endliche Werte, beispielsweise den Lochdurchmesser der Löcher der ersten Lochblende aufweist. Die Zweiteilung in Erzeugung und Selektion der Strahlenbündel ermöglicht bei einfachem Meßaufbau die schnelle und flexible Qualifizierung von optischen Elementen mit stark schwankenden Brechkräften.

Um die Lochanordnung der zweiten Lochblende an das zu untersuchende optische Element anpassen zu können, ist es günstig, wenn ein Modul zu Verfügung steht, mit dem die zweite Lochblende ausgetauscht werden kann. Dies kann beispielsweise eine drehbar gelagerte Scheibe sein, auf deren Umfang mehrere zweite Lochblenden angeordnet sind, wobei sich jeweils eine zweite Lochblende im Strahlengang befindet. Durch Drehen der Scheibe, die senkrecht zum Strahlengang angeordnet ist, lassen sich verschiedene zweite Lochblenden in den Strahlengang bringen. Eine andere Möglichkeit ist eine Schiebevorrichtung. Realisierbar ist auch ein VorratsMagazin mit zweiten Lochblenden, wobei der Austausch mit Hilfe eines Roboterarms erfolgt.

Um die Meßvorrichtung für eine Serienprüfung einsetzen zu können, ist es vorteilhaft, wenn ein Modul, beispielsweise ein Roboter, zum Wechseln des zu untersuchenden optischen Elements vorgesehen ist.

Damit die Strahlenbündel nach dem Strahlumformer bis auf die Beugungsaufweitung kollimiert verlaufen, ist es vorteilhaft, eine nahezu punktförmige Lichtquelle zu verwenden. Dies wird beispielsweise über eine Lochblende nach einer thermischen Lichtquelle erreicht. LaserLichtquellen mit geringer Quelldivergenz erfüllen diese Eigenschaft ebenfalls.

Die Auswertung wird erleichtert, wenn der Strahlumformer mit einer nahezu ebenen Welle beleuchtet wird. Die Lichtbündel verlaufen dann bis auf die Beugungsaufweitung parallel zueinander zwischen Strahlumformer und Detektor, wenn das zu untersuchende optische Element aus dem Strahlengang herausgenommen ist. Somit läßt sich die Lochanordnung des Strahlumformers zur Kalibrierung verwenden.

Ein besonders günstiger Aufbau der Meßapparatur ergibt sich, wenn sich zwischen Strahlumformer und Manipulator einerseits und dem Detektor andererseits keine weiteren transparenten optischen Elemente im Strahlengang befinden. Die Strahlenbündel propagieren linear von dem Strahlumformer zum Detektor, ohne durch eine aberrationsbehaftete Zwischenabbildung beeinflußt zu werden. Die Fehlerquellen sind deshalb auf ein Minimum reduziert. Dies ist besonders bei der Beleuchtung mit einer nahezu ebenen Welle günstig, da dann die Lochanordnung der ersten Lochblende direkt als Referenz verwendet werden kann.

Der Aufbau ohne Zwischenabbildung erfordert einen ortsauflösenden Detektor, der in seiner Ausdehnung an den zu untersuchenden Bereich des optischen Elements angepaßt ist. Bei der Qualifizierung von Brillengläsern mit Durchmessern von 70mm ist es günstig, wenn der ortsauflösende Detektor ebenfalls einen Durchmesser von 70mm oder größer aufweist. Ist ein derartiger Detektor nicht verfügbar, der den ganzen Meßbereich abdeckt, so kann der Detektor auch über den Meßbereich gescannt werden. Realisierbar ist auch die Verwendung eines Zeilendetektors, der senkrecht zur Zeile gescannt wird.

Um Geisterbilder auf dem Detektor zu vermeiden, ist es vorteilhaft, den Strahlumformer und den Manipulator für den verwendeten Wellenlängenbereich der Lichtquelle zu entspiegeln. Bei der Verwendung von Lochblenden-Platten ist es günstig, die Bereiche zwischen den Löchern zu schwärzen, und die transparenten Löcher mit einer Antireflex-Schicht zu versehen.

Die Erfindung betrifft auch ein Verfahren zur ortsaufgelösten Bestimmung der Brechtkraftverteilung eines optischen Elements. Dabei wird das optische Element, das sich zwischen einer Quelle und einem ortsauflösenden Detektor befindet, mit einem ausgedehnten Strahlenbüschel beleuchtet, das vor oder nach dem zu untersuchenden optischen Element in eine erste Anzahl von Strahlenbündeln aufgespalten wird. Vorteilhafterweise wird die erste Anzahl von Strahlenbündeln auf eine zweite Anzahl derart reduziert, daß mit dem Detektor eine Anzahl räumlich getrennter Intensitätspeaks erfaßt wird, die der zweiten Anzahl entspricht. Aus der Verteilung der Intensitätspeaks auf dem Detektor wird die Brechkraftverteilung des zu untersuchenden optischen Elements bestimmt.

Die Reduktion der ersten Anzahl von Strahlenbündeln erfolgt mit einem Manipulator. Als Manipulator wird eine austauschbare Lochblende eingesetzt.

Es ist ein Modul zum Tauschen des optischen Elements vorgesehen. Damit läßt sich eine Serienprüfung von optischen Elementen, beispielsweise von Gleitsicht-Brillengläsern, einfach realisieren. Das optische Element wird in den Strahlengang eingeführt, wobei die Recheneinheit ein für das optische Element chrakteristische Signal erhält. Beispielsweise kann ein Scanner den Barcode auf der Halterung des optische Elements lesen. Dieses Signal ermöglicht es der Recheneinheit, dem optischen Element eine abgespeicherte Soll-Brechkraftverteilung zuzuordnen. Anhand der Soll-Brechkraftverteilung bestimmt die Recheneinheit die Ansteuerung des Manipulators. Dies kann beispielsweise bedeuten, daß eine passende Lochblende in den Strahlengang gebracht wird, oder daß einzelne Pixel der elektrooptischen Verschlußmaske auf opak geschaltet werden oder daß mit den Mikrospiegel einzelne Strahlenbündel abgelenkt werden, so daß sie nicht auf den Detektor gelangen. Mit dem Manipulator kann die erste Anzahl der Strahlenbündel auf die zweite Anzahl so reduziert werden, daß die Intensitätspeaks auf dem Detektor räumlich getrennt erfaßt werden können. Aus diesen Intensitätspeaks kann die Ist-Brechkraftverteilung des optischen Elements bestimmt werden. Weicht sie von der Soll-Brechkraftverteilung über ein vorgegebenes Toleranzmaß hinaus ab, so wird das optische Element als außer Toleranz gekennzeichnet. Realisierbar ist auch, daß die Differenzverteilung zur Nachbearbeitung des optischen Elements verwendet wird.

Weist ein optisches Element hohe positive Brechkräfte auf, so kann dies leicht zum Überlapp der Intensitätspeaks auf dem Detektor führen. Die Zahl der Strahlbündel muß deshalb reduziert werden. Andererseits wird durch Reduktion der Strahlbündel die Ortsauflösung und Meßgenauigkeit verringert. Um ein optisches Element mit hoher Ortsauflösung qualifizieren zu können, wird vorteilhafterweise das optische Element mit unterschiedlichen Anordnungen von Strahlenbündeln ausgewertet. Dies läßt sich einfach über die Ansteuerung des Manipulators realisieren.

Mit der Erfindung ist es gelungen, eine Meßvorrichtung und ein Meßvefahren anzugeben, mit dem es möglich ist, auf einfache Weise mit höchster Auflösung die Brechkraftverteilung eines optischen Elements zu bestimmen. Zur Qualifizierung eines breiten Spektrums von optischen Elementen mit unterschiedlicher Brechkraftverteilung nach dem Hartmann-Verfahren ist es wünschenswert, Anzahl und Position der Strahlenbündel variieren zu können. Um nicht vor jeder Messung eine Neukalibrierung durchführen zu müssen, schlägt die Erfindung vor, Generierung und Auswahl der Strahlenbündel in zwei Schritten vorzunehmen. Dies wurde durch die Kombination von Strahlumformer und Manipulator erreicht. Der Strahlumformer erzeugt eine feste Anordnung von scharf begrenzten Strahlenbündeln. Über einen Manipulator lassen sich die Strahlenbündel ein- und ausschalten.

Näher erläutert wird die Erfindung anhand der Zeichnungen.

| Figur 1 | zeigt eine perspektivische Darstellung eines erfindungsgemäßen Wellenfront-Meßgerätes mit erster und zweiter Lochblende; |
| Figur 2 | zeigt eine Prinzipskizze des Wellenfront-Meßgerätes in Figur 1 im Schnitt zur Erläuterung der in der Ableitung des maximalen Meßbereichs verwendeten Abkürzungen; |
| Figur 3 | zeigt eine Aufsicht auf eine Ausführungsform für eine erste Lochblende; |
| Figur 4 | zeigt eine Aufsicht auf eine Ausführungsform für eine zweite Lochblende; |
| Figur 5 und Figur 6 | zeigen Aufsichten auf weitere Ausführungsformen für eine erste Lochblende; und |
| Figur 7 | zeigt den schematischen Aufbau eines automatisierten Meßgerätes. |

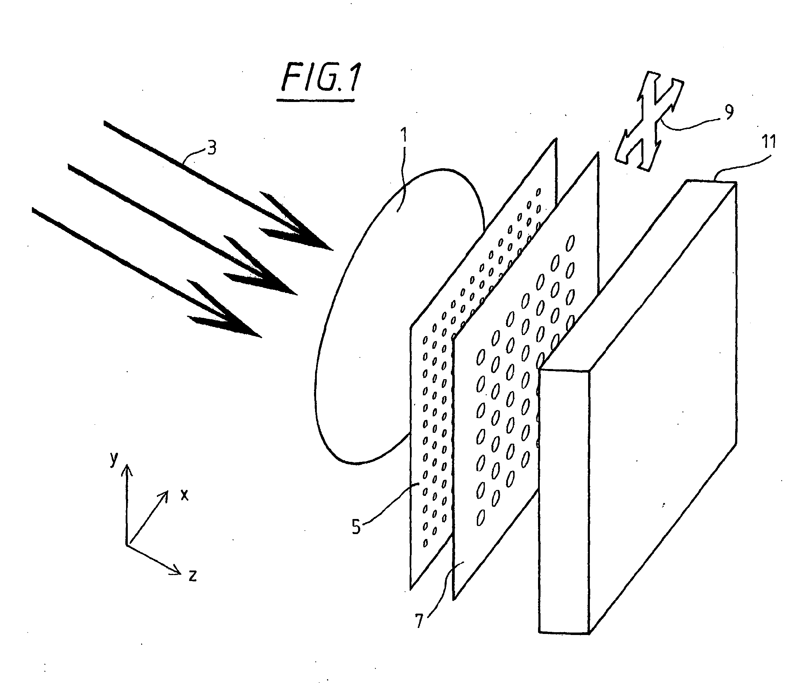

In Figur1 ist ein Ausführungsbeispiel für ein Wellenfront-Meßgerät gemäß der Erfindung dargestellt. Ein optisches Element 1, beispielsweise ein Brillenglas, wird mit einem parallelen Strahlenbüschel 3 beleuchtet. Das parallele Strahlenbüschel 3 verläuft parallel zur z-Richtung. Die in Strahlrichtung hinter dem optischen Element 1 angeordnete erste Lochblende 5 erzeugt eine erste Anzahl von Strahlenbündel, die aus den Löchern der ersten Lochblende 5 treten. Eine zweite Lochblende 7 mit geringerer Lochdichte und mit Löchern mit größerem Lochdurchmesser reduziert die erste Anzahl von Strahlenbündeln auf eine zweite Anzahl von Strahlenbündeln. Während die erste Lochblende 5 die Strahlenbündel erzeugt, erfolgt mit der zweiten Lochblende 7 eine Auswahl der Strahlenbündel. Da die zweite Lochblende 7 austauschbar und/oder in der Lochblendenebene verschiebbar ist, kann diese Auswahl angepaßt an die Brechkraftverteilung des zu untersuchenden optischen Elements 1 erfolgen. Ein Modul 9 zum Austauschen oder Verschieben der zweiten Lochblende 7 in x- und y-Richtung ist als Doppelpfeil angedeutet. Aufgrund der größeren Lochdurchmesser sind die Anforderungen an die Positioniergenauigkeit der zweiten Lochblende 7 reduziert.

Die zweite Anzahl von Strahlenbündel trifft auf den Detektor 11 und erzeugt dort eine gleiche Anzahl von Intensitätspeaks. Die Lochanordnung auf der zweiten Lochblende 7 wird dabei so gewählt, daß die Intensitätspeaks räumlich getrennt auf der Eintrittsfläche des Detektors 11 vorliegen. Die Position eines Intensitätspeaks im Vergleich zu der Position ohne Ablenkung d.h. ohne optisches Element 1 ist ein Maß für die lokale Brechkraft des optischen Elements 1 am Durchstoßpunkt des Strahlenbündels, das den Intensitätspeak erzeugt.

Die Größe des Detektors 11 ist so gewählt, daß das interessierende Meßfeld mit einem Durchmesser von ca. 50 mm vollständig abgedeckt wird. Entsprechende großflächige CCD-Detektoren 11 sind erst seit kurzem kommerziell erhältlich und beinhalten mindestens 2000 x 2000 Pixel. Momentan liegt die maximale Pixelzahl bei 4000 x 7000 Punktes, was in etwa einer Detektorfläche von 48mm x 84mm entspricht. Ein CCD Detektor 11 dieser Art ist von Philips kommerziel erhältlich.

Insbesondere bei großen positiven Dioptriewerten des optischen Elements 1, beispielsweise ein Brillenglas, können die Intensitätspeaks auf der Eintrittsfläche des Detektors 11 derart benachbart zu liegen kommen, daß sie nicht mehr einzeln aufgelöst werden können. Diese Grenze ist bei herkömmlichen Meßgeräten bei ca. 10 dpt erreicht.

Blendet man nun jedes zweite Strahlenbündel durch die zweite Lochblende 7 aus, so sind auf dem Detektor 11 alle verbleibenden Intensitätspeaks wieder separierbar. Durch eine horizontale und vertikale Verschiebung dieser zweiten Lochblende 7 mit Hilfe des Moduls 9 wird in weiteren Meßschritten die Ablenkung der zuvor ausgeblendeten Intensitätspeaks detektiert. Die gesamte Meßdauer vervierfacht sich zwar dadurch, liegt aber immer noch in einem Zeitbereich unter einer Minute. Das Ausblenden einzelner Lichtpunkte stellt keine hohen Anforderungen an Maßhaltigkeit und Positioniergenauigkeit der zweiten Lochblende 7. Die Meßgenauigkeit hängt lediglich von der Positioniergenauigkeit und der stabilen Lagerung des optischen Elements 1, der ersten Lochblende 5 und des Detektors 11 ab.

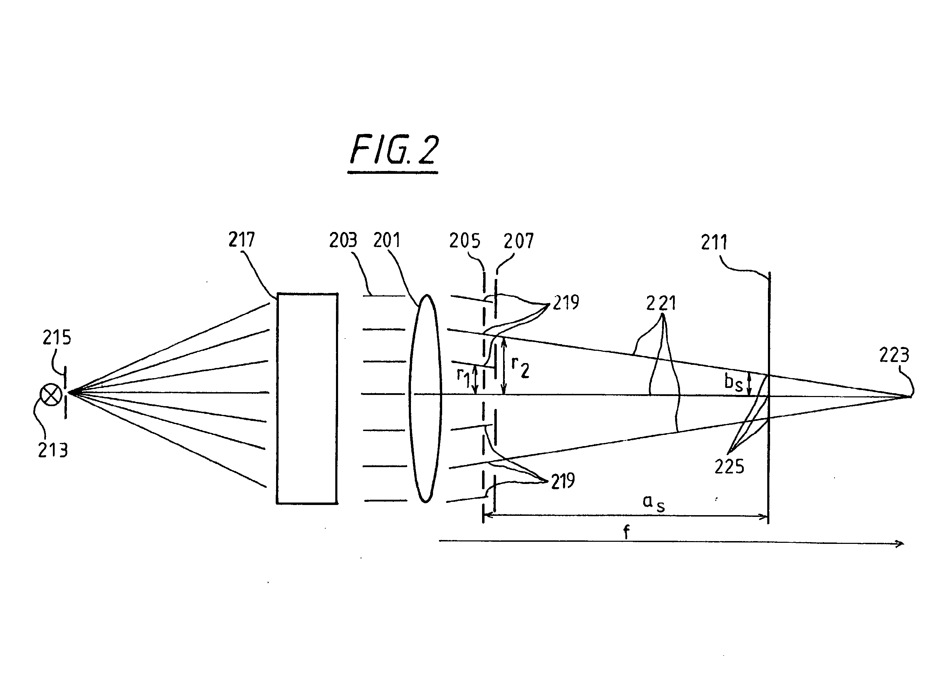

Figur 2 zeigt eine Prinzipskizze des Meßaufbaus in der Seitenansicht. Die den Elementen von Figur 1 entsprechenden Elemente in Figur 2 haben die gleichen Bezugzeichen wie in Figur 1 vermehrt um die Zahl 200. Für eine Beschreibung dieser Elemente wird auf die Beschreibung zu Figur 1 verwiesen. Als Lichtquelle 213 ist eine Halogenlampe mit einer nachgeschaltenen Lochblende 215 vorgesehen. Eine Beleuchtungsoptik 217 erzeugt ein nahezu paralleles Strahlenbüschel 203. Das zu untersuchende optische Element 201, beispielsweise ein Brillenglas, wird somit mit einer nahezu ebenen Welle beleuchtet. Nach dem optischen Element 201 folgt eine erste Lochblende 205 zur Erzeugung einer ersten Anzahl von Strahlenbündeln 219. In diesem qualitativen Beispiel sind sieben Strahlenbündel 219 eingezeichnet. Mit einer zweiten Lochblende 207 wird die erste Anzahl von Strahlenbündeln 219 auf eine zweite Anzahl von Strahlenbündel 221, im gezeigten Beispiel sind es drei Strahlenbündel 221, reduziert. Der Lochabstand $r_2$ der zweiten Lochblende 207 ist doppelt so groß wie der Lochabstand $r_1$ der ersten Lochblende 205. Die Strahlenbündel 221 konvergieren für ein optisches Element 201 mit positiver Brechkraft auf den im Abstand der Brennweite f gelegenen Fokus 223 hin. Im Abstand $a_s$ von der ersten Lochblende 205 ist der ortsauflösende Detektor 211, beispielsweise eine CCD-Kamera angebracht, auf dessen Eintrittsfläche die zweite Anzahl von Strahlenbündel 221 gaussförmige Intensitätspeaks 225 erzeugt.

Zur Berechnung des maximal möglichen Meßbereichs in Abhängigkeit

- der Brechkraft D des optischen Elements 201,
- des Abstandes $r_2$ der Strahlenbündel 221, der durch den Lochabstand $r_2$ der zweiten Lochblende 207 gegeben ist,
- des Abstandes bs der Intensitätspeaks 225 auf der Eintrittsfläche des Detektors 211 und
- des Abstandes $a_s$ der ersten Lochblende 205 von dem Detektor 211 ist folgende Formel gegeben:

$$D = \frac{r_2 - b_S}{a_S \cdot r_2} \cdot 1000 \cdot \frac{dpt}{mm}$$

Hierbei bedeuten: D = Dioptriewert des optischen Elements 201.

$r_2$ = Lochabstand auf der zweiten Lochblende 207 in mm.

$b_S$ = Abstand der Intensitätspeaks 225 in mm.

$a_S$ = Meßabstand zwischen erster Lochblende 205 und Detektor 211 in mm.

Betrachtet werden der Verlauf zweier Strahlenbündel; das mittlere Strahlenbündel durch das mittlere Loch der Lochblende 207 und eines seiner nächsten Nachbarn. Die Meßbereichslimitierung ist durch die Einhaltung eines Mindestabstands bs der Intensitätspeaks 225 auf der Detektorfläche 211 derart gegeben, daß beide Intensitätspeaks 225 getrennt aufgelöst werden können. Bei einem Durchmesser der Intensitätspeaks 225 von 0,5 mm und einem vorgegebenen Mindestabstand der Peakränder von 0,1 mm ergibt sich ein Abstand der Intensitätspeaks 225 von $b_S$ = 0,6 mm. Bei einem typischen Meßabstand $a_S$ = 50 mm und einem Abstand $r_2$ =1,0 mm der Strahlenbündel nach den beiden Lochblenden ergibt sich nach obiger Formel eine Meßbereichsgrenze von 8 dpt.

Verändert man den Abstand der Strahlenbündel 221 durch Ausblenden mit Hilfe der zweiten Lochblende 207 auf den doppelten Wert, so erhöht sich der Meßbereich bereits auf 14 dpt.

Tabelle 1 gibt die Meßbereichsbegrenzung für drei verschiedene Abstände $r_2$ der Strahlenbündel 221 an.

Tabelle 1

| Durchmesser der Intensitätspeaks | Abstand der Strahlenbündel nach der Kombination von erster und zweiter Lochblende | Abstand der Intensitätspeaks auf der Detektorfläche | Meßabstand zwischen Detektor und erster Lochblende | Maximal möglicher Brechwert der Meßprobe |
|---|---|---|---|---|
| 0,5 mm | 1 mm | 0,6 mm | 50 mm | 8 dpt |
| 0,5 mm | 1,5 mm | 0,6 mm | 50 mm | 12 dpt |
| 0,5 mm | 2 mm | 0,6 mm | 50 mm | 14 dpt |

Selbst extrem große Dioptriewerte von mehr als 25 dpt. lassen sich erfassen, wenn mit Hilfe der zweiten Lochblende 207 der Abstand zwischen den Strahlenbündeln 221 entsprechend erhöht wird. Da die erste Lochblende 205 als Referenz im Strahlengang verbleibt, kann ohne erneute Kalibrierung der Abstand der Strahlenbündel 221 geändert werden.

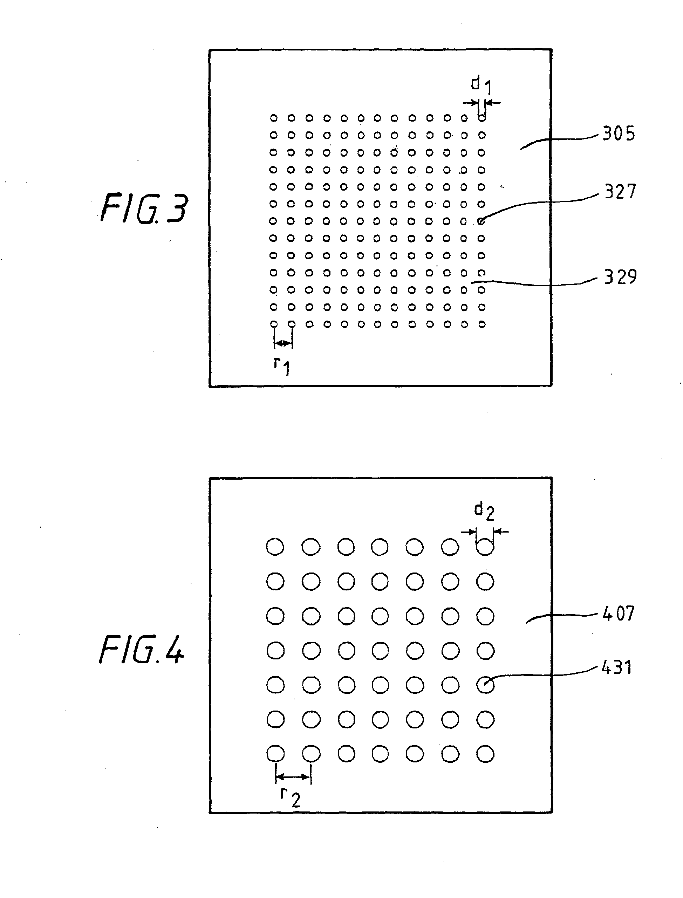

Figur 3 zeigt ein Ausführungsbeispiel einer ersten Lochblende 305. Zur Veranschaulichung sind die Löcher 327 übertrieben groß und nur ein Teil der Löcher 327 eingezeichnet. Typischerweise enthält die erste Lochblende 305 mehr als 30 x 30 Löcher 327. Um die erste Lochblende 305 zusammen mit allen typischen Brillenglasformaten einsetzen zu können, sollte die Ausdehnung der ersten Lochblende 70 mm x 70 mm oder mehr betragen. Ein optimaler Rasterabstand $r_1$ liegt zwischen 1 mm und 2 mm. Ein bezüglich Lichtbeugung optimierter Lochdurchmesser $d_1$ liegt zwischen 0,2 und 0,3 mm, wie aus folgender Berechnung ersichtlich ist.

Der Begrenzungswinkel eines Beugungsvergrößerten Intensitätspeaks wird bestimmt durch:

$$\rho = 1{,}22 \cdot \lambda / d_1$$

mit: $\rho$ = Bergrenzungswinkel
$\lambda$ = Wellenlänge
$d_1$ = Lochdurchmesser der Löcher 327 auf der ersten Lochblende 305

Für einen Meßabstand $a_S$ = 50 mm ergeben sich die in Tabelle 2 aufgeführten Durchmesser für die Intensitätspeaks auf der Detektorfläche.

Tabelle 2

| Lochdurchmesser $d_1$ [mm] | Durchmesser des Intensitätspeaks [mm] |
|---|---|
| 0,1 | 0,1 +0,44=0,54 |
| 0,2 | 0,2+0,33=0,53 |
| 0,3 | 0,3+0,22=0,52 |
| 0,4 | 0,4+0,17=0,57 |

Mit kleiner werdendem Lochdurchmesser d1 führt die Beugung zu einem Anwachsen des Durchmessers der Intensitätspeaks. Für eine Projektionsentfernung von 50 mm ergibt sich daher ein optimaler Lochdurchmesser d1 von 0,3 mm für einen minimalen Durchmesser der Intensitätspeaks auf der Detektorfläche.

Zur Vermeidung störender Reflexe sind die Lochblenden-Platten in den Bereichen 329 zwischen den Löchern zu schwärzen und in den Durchlaßzonen 327 mit einer Anti-Reflex-Beschichtung für das von der Lichtquelle abgestrahlte Wellenlängenspektrum $\lambda_0 \pm \Delta\lambda$ zu versehen.

Figur 4 zeigt ein Ausführungsbeispiel einer zweiten Lochblende 407 mit im Vergleich zu der in Figur 3 gezeigten ersten Lochblende 305 doppeltem Lochabstand $r_2$. Es wird also pro Zeile nur jedes zweite Strahlenbündel durchgelassen. Durch horizontale und vertikale Verschiebung der zweiten Lochblende 407 um ihr halbes Rastermaß $r_2/2$ werden in den folgenden Meßschritten die zuvor vignettierten Strahlenbündel detektiert. Der Lochdurchmesser $d_2$ der Löcher 431 der zweiten Lochblende 407 ist unkritisch. Er sollte größer als der Lochdurchmesser $d_1$ der verwendeten ersten Lochblende 305 sein. Ein doppelter Lochdurchmesser $d_2 = 2 \cdot d_1$ hat sich dabei als praktikabel erwiesen. Der Lochdurchmesser $d_2$ auf der zweiten Lochblende 407 sollte im Bereich $d_1 < d_2 \leq 2 \cdot d_1$ liegen. Zur Veranschaulichung sind die Löcher 431 übertrieben groß und nur ein Teil der Löcher 431 eingezeichnet. Typischerweise enthält die zweite Lochblende 407 mehr als hundert Löcher 431, so daß entsprechend viele Strahlenbündel auf den Detektor treffen.

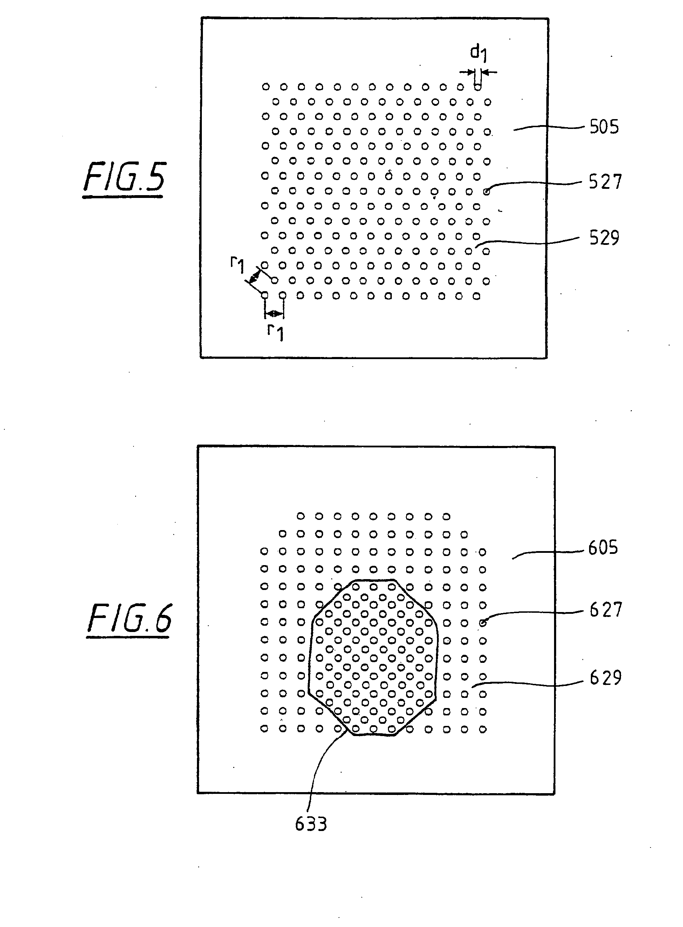

In Figur 5 ist ein weiteres Ausführungsbeispiel einer ersten Lochblende 505 aufgezeigt. Die den Elementen der Figur 3 entsprechenden Elemente in Figur 5 haben die gleichen Bezugszeichen vermehrt um die Zahl 200. Für eine Beschreibung dieser Elemente wird auf die Beschreibung zur Figur 3 verwiesen. Eine derartige Lochanordnung besitzt einen einheitlichen Lochabstand $r_1$ zu allen Nachbarn. Dies ermöglicht eine gleichförmigere und einheitlichere Ortsvermessung des optischen Elements als dies bei einer quadratischen Anordnung wie in Figur 3 der Fall ist.

In Figur 6 ist ein weiteres Ausführungsbeispiel einer ersten Lochblende 605 aufgezeigt, deren Lochanordnung speziell für die Vermessung von Zwei-Stärken- oder Gleitsicht-Brillengläsem mit einem Nahbereich und einem Fernbereich angepaßt ist. Die den Elementen der Figur 3 entsprechenden Elemente in Figur 6 haben die gleichen Bezugszeichen vermehrt um die Zahl 300. Für eine Beschreibung dieser Elemente wird auf die Beschreibung zur Figur 3 verwiesen. In einem zusammenhängenden Bereich, der dem Bereich des Nahteils des Brillenglases entspricht und das von der mit dem Bezugszeichen 633 versehenen Umrandungslinie umschlossen ist, ist die Lochdichte gegenüber den übrigen Bereichen verdoppelt. In Figur 6 ist nur ein Teil der Löcher 627 mit übertrieben großem Lochdurchmesser eingezeichnet, um das qualitative Vorgehen bei der Lochanordnung in der ersten Lochblende 605 aufzuzeigen.

Bei einer ersten Lochblende 605 nach Figur 6 ist zu erwarten, daß die Strahlenbündel des Nahbereichs 633 zu überlappenden Intensitätspeaks auf dem Detektor führen. Hier ist es besonders günstig, mit der zweiten Lochblende 605 einzelne Strahlenbündel im Nahbereich 633 auszublenden. Um dennoch die hohe Ortsauflösung mit Hilfe aller von der ersten Lochblende 605 erzeugten Strahlenbündel ausnutzen zu können, können in mehreren nacheinander folgenden Messungen mit unterschiedlichen Lochanordnungen der zweiten Lochblende alle Strahlenbündel detektiert werden.

Neben dem diskreten Wechsel zwischen einer ersten konstanten Lochdichte für das Nahteil 633 und einer zweiten konstanten Lochdichte für den übrigen Bereich des Brillenglases, ist es in einer weiteren Ausführungsform günstig, wenn die Lochdichte kontinuierlich variiert. Beispielsweise kann die lokale Lochdichte an die Brechkraftverteilung angepaßt sein. Im Bereich eines hohen Brechkraftgradienten ist beispielsweise eine hohe Lochdichte, im Bereich eines geringen Brechkraftgradienten eine niedrigere Lochdichte vorzusehen.

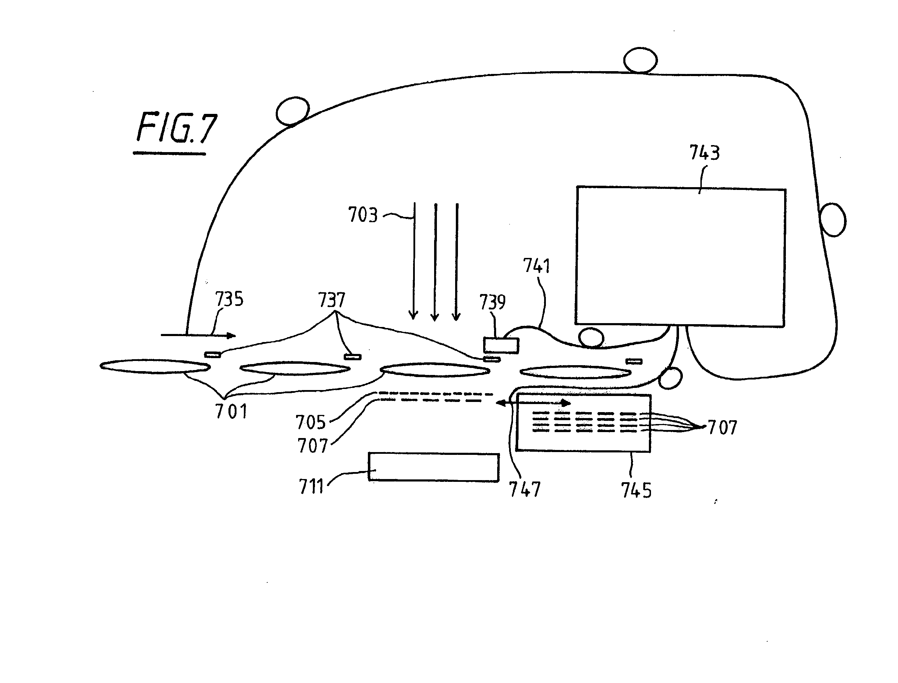

Figur 7 zeigt den Einsatz der erfinderischen Meßapparatur in der automatisierten Produktionskontrolle. Die den Elementen der Figur 1 entsprechenden Elemente in Figur 7 haben die gleichen Bezugszeichen vermehrt um die Zahl 700. Für eine Beschreibung dieser Elemente wird auf die Beschreibung zur Figur 1 verwiesen. Die optischen Elemente 701, beispielsweise Brillengläser, befinden sich auf einem als Pfeil angedeuteten Laufband 735 und werden von einem Roboterarm in das Meßgerät eingesetzt. Selbstverständlich sind auch andere Transport- und Wechsel-Mechanismen realisierbar. Die optischen Elemente 701 oder ihre Halterungen sind mit einer Kennung 737, beispielsweise einem Barcode versehen. Diese Kennung 737 wird von einem Lesegerät 739 erfaßt und über die Signalleitung 741 als Signal an die Recheneinheit 743, beispielsweise ein PC oder eine Workstation, weitergeleitet. Die Recheneinheit 743 steuert den kompletten Meßablauf. In der Recheneinheit 743 sind die Soll-Brechkraftverteilungen der zu untersuchenden optischen Elemente 701 und die Lochanordnungen der in einem Magazin 745 abgelegten zweiten Lochblenden 707 abgespeichert. Aufgrund des aufgenommenen Signals wird dem optischen Element 701 seine Soll-Brechkraftverteilung zugeordnet. Aufgrund der Soll-Brechkraftverteilung wählt die Recheneinheit 743 die passende zweite Lochblende 707 aus den vorrätigen zweiten Lochblenden 707 aus. Möglich ist auch, daß mehrere zweite Lochblenden 707 mit unterschiedlichen Lochanordnungen zum Einsatz kommen, die nacheinander eingesetzt werden. Nach der Positionierung der zweiten Lochblende 707 in den Strahlengang, beispielsweise mit Hilfe eines Roboterarms 747 oder eines Blendenrades, erfolgt die Vermessung des optischen Elementes 701 mit anschließender Berechnung der Ist-Brechkraftverteilung. Anhand der Differenz von Soll- und Ist-Brechkraftverteilung kann das optische Element 701 nach vorgegebenen Toleranzwerten von der Recheneinheit bewertet werden.

**Patentansprüche**

1. Vorrichtung zur ortsaufgelösten Bestimmung der Brechkraftverteilung eines optischen Elements (1; 201; 701)

   - mit einer Lichtquelleneinheit (213,215,217) zum Beleuchten des optischen Elements (1; 201; 701) mit einem ausgedehnten Strahlenbüschel (3; 203; 703),
   - mit einem Strahlumformer (5; 205; 305; 505; 605; 705) zur Erzeugung einer ersten Anzahl von Strahlenbündeln (219),
   - mit einem ortsauflösenden Detektor (11; 211;711)
   - mit einer Recheneinheit (743), wobei

   vor oder hinter dem Strahlumformer (5; 205; 305; 505; 605; 705) ein Manipulator (7; 207; 407; 707) angeordnet ist, wobei der Manipulator ansteuerbar ist, wobei die Kombination von Strahlumformer (5; 205; 305; 505; 605; 705) und Manipulator (7; 207; 407; 707) nur für eine zweite Anzahl von Strahlenbündel (221) durchlässig ist, und wobei die zweite Anzahl kleiner als die erste Anzahl, aber größer eins ist, **dadurch gekennzeichnet, dass** der Manipulator (7; 207; 407; 707) eine austauschbare Lochblende (7; 207; 407; 707) ist, daß ein Modul (9; 747) zum Wechseln der austauschbaren Lochblende (7; 207; 407; 707) vorgesehen ist und daß ein Magazin (745) mit mehreren austauschbaren Lochblenden (7; 207; 407; 707) unterschiedlicher Lochanordnung vorgesehen ist und die austauschbaren Lochblenden (7; 207; 407 ; 707) von der Recheneinheit (743) gesteuert auswechselbar sind.

2. Vorrichtung nach Anspruch 1, **dadurch gekennzeichnet, daß** die Lochanordnung der austauschbaren Lochblende (7; 207; 407; 707) an die Brechkraftverteilung des optischen Elements (1; 201; 701) derart angepaßt ist, daß die zweite Anzahl von Strahlenbündeln (221) auf der Eintrittsfläche des Detektors (11; 211; 711) die gleiche Anzahl von räumlich getrennten Intensitätspeaks (225) wie die zweite

**EP 1 136 806 B1**

Anzahl erzeugt.

3. Vorrichtung nach Anspruch 2, **dadurch gekennzeichnet, daß** die Anzahl der räumlich getrennten Intensitätspeaks (225) auf der Eintrittsfläche des Detektors (11; 211; 711) größer hundert ist.

4. Vorrichtung nach einem der vorangegangen Ansprüche, **dadurch gekennzeichnet, daß** der Manipulator (7; 207; 407; 707) unmittelbar vor oder hinter dem Strahlumformer (5; 205; 305; 505; 605; 705) angeordnet ist.

5. Vorrichtung nach einem der vorangegangenen Ansprüche, **dadurch gekennzeichnet, daß** der Strahlumformer (5; 205; 305; 505; 605; 705) eine Lochblende (5; 205; 305; 505; 605; 705) oder ein Linsenarray ist.

6. Vorrichtung nach Anspruch 5, **dadurch gekennzeichnet, daß**
   der minimale Lochabstand der ersten Lochblende (5; 205; 305; 505; 605; 705) so groß ist, daß die erste Anzahl von Strahlenbündeln (219) bei nicht im Strahlengang befindlichem optischen Element (1; 201; 701) und bei nicht im Strahlengang befindlichem Manipulator (7; 207; 407; 707) auf der Eintrittsfläche des Detektors (11; 211; 711) die gleiche Anzahl von räumlich getrennten Intensitätspeaks (225) wie die erste Anzahl erzeugt.

7. Vorrichtung nach Anspruch 6, **dadurch gekennzeichnet, daß** der Lochabstand auf der Lochblende (5; 205; 305; 505; 605; 705) höchstens 1/30, vorzugsweise 1/50 der lateralen Ausdehnung des zu untersuchenden Bereichs des optischen Elements (1; 201; 701) beträgt.

8. Vorrichtung nach einem der Ansprüche 5 bis 7, **dadurch gekennzeichnet, daß**
   die zweite Anzahl von Strahlenbündeln (221) ausschließlich von den Löchern (327; 527; 627) der Lochblende (5; 205; 305; 505; 605; 705) begrenzt werden.

9. Vorrichtung nach Anspruch 8, **dadurch gekennzeichnet, daß**
   die Löcher (327; 527; 627) der Lochblende (5; 205; 305; 505; 605; 705) einen ersten Durchmesser und die Löcher (431) der austauschbaren Lochblende (7; 207; 407; 707) einen zweiten Durchmesser aufweisen und dass die laterale Positioniergenauigkeit der austauschbaren Lochblende (7; 207; 407; 707) zur Lochblende (5; 205; 305; 505; 605; 705) kleiner als die betragsmäßige Differenz der ersten und zweiten Durchmesser ist.

10. Vorrichtung nach einem der Ansprüche 1 bis 9, **dadurch gekennzeichnet, daß**
    ein Modul (735) zum Wechseln des optischen Elements (1; 201; 701) vorgesehen ist.

11. Vorrichtung nach einem der vorangegangenen Ansprüche, **dadurch gekennzeichnet, daß** die Lichtquelleneinheit (213, 215, 217) eine effektive nahezu punktförmige Lichtquelle (213, 215) enthält.

12. Vorrichtung nach einem der vorangegangenen Ansprüche, **dadurch gekennzeichnet, daß**
    das optische Element (1; 201; 701) mit einer nahezu ebenen Welle (3; 203; 703) beleuchtet ist.

13. Vorrichtung nach einem der vorangegangenen Ansprüche, **dadurch gekennzeichnet, daß**
    der Strahlumformer (5; 205; 305; 505; 605; 705) und der Manipulator (7; 207; 407; 707) nach dem optischen Element (1; 201; 701) angeordnet sind und daß nach dem Strahlumformer (5; 205; 305; 505; 605; 705) und dem Manipulator (7; 207; 407; 707) ohne Zwischenschaltung weiterer transparenter Elemente der Detektor (11; 211; 711) folgt.

14. Vorrichtung nach einem der vorangegangenen Ansprüche, **dadurch gekennzeichnet, daß** der Detektor (11; 211; 711) eine erste laterale Ausdehnung und der zu untersuchende Bereich des optischen Elements (1; 201; 701) eine zweite laterale Ausdehnung aufweist, und daß die erste laterale Ausdehnung größer als die zweite laterale Ausdehnung ist.

15. Vorrichtung nach einem der Ansprüche 5 bis 14, **dadurch gekennzeichnet, daß**
    die Lichtquelle (213) Licht innerhalb des Wellenlängenbereichs $\lambda_0 \pm \Delta\lambda$ erzeugt, und die Lochblende (5; 205; 305; 505; 705) und die austauschbare Lochblende ( 7; 207;; 407; 707) für den Wellenlängenbereich $\lambda_0 \pm \Delta\lambda$ entspiegelt ist.

16. Verfahren zur ortsaufgelösten Bestimmung der Brechkraftverteilung eines optischen Elements (1; 201; 701), wobei

    - das optische Element (1; 201; 701) mit einem ausgedehnten Strahlenbüschel (3; 203; 703) beleuchtet wird,
    - eine erste Anzahl von Strahlenbündeln (219) erzeugt wird,

**9**

- die erste Anzahl von Strahlenbündeln (219) auf eine zweite Anzahl von Strahlenbündeln (221) reduziert wird, wobei die zweite Anzahl größer eins ist,
- räumlich getrennte Intensitätspeaks (225) mit einem ortsauflösenden Detektor (11,211; 711) erfasst werden, wobei die Anzahl der räumlich getrennten Intensitätspeaks (225) gleich der zweiten Anzahl von Strahlenbündeln (221) ist,
- die Brechkraftverteilung des optischen Elements (1; 201; 701) mit einer Recheneinheit (743) berechnet wird, **dadurch gekennzeichnet, dass** die Reduzierung mit einem Manipulator (7; 207; 407; 707) erfolgt, wobei der Manipulator (7; 207; 407; 707) eine Lochblende (7; 207; 407; 707) ist, wobei die Lochblende (7; 207; 407; 707) ausgetauscht wird.

17. Verfahren nach Anspruch 16, **dadurch gekennzeichnet, daß** das optische Element (1; 201; 701) ausgetauscht wird.

18. Verfahren nach einem der Ansprüche 16 oder 17, **dadurch gekennzeichnet,**
**daß** es in der Prüfung von unterschiedlichen optischen Elementen (1; 201; 701) mit bekannter Soll-Brechkraftverteilung angewandt wird,
**daß** beim Einbau des optischen Elements (1; 201; 701) über ein Signal an die Recheneinheit (743) die Zuordnung einer abgespeicherten Soll-Brechkraftverteilung zu dem optischen Element (1; 201; 701) erfolgt,
**daß** die Recheneinheit (743) den Manipulator (7; 207; 407; 707) zur Reduzierung der Lichtbündel ansteuert,
**daß** die Position der Intensitätspeaks (225) gemessen wird, und
**daß** die Ist-Brechkraftverteilung mit der Recheneinheit (743) bestimmt wird.

19. Verfahren nach einem der Ansprüche 16 bis 18, **dadurch gekennzeichnet,**
**daß** für das optisches Element (1; 201; 701) eine Messung mit einer ersten Ansteuerung des Manipulators (7; 207; 407; 707) durchgeführt wird,
**daß** mindestens eine weitere Messung mit einer zweiten Ansteuerung des Manipulators (7; 207; 407; 707) durchgeführt wird, wobei der Manipulator (7; 207; 407; 707) jeweils andere Strahlenbündel durchläßt, und
**daß** aus den Messungen die Ist-Brechkraftverteilung des optischen Elements (1; 201; 701) bestimmt wird.

**Claims**

1. Device for the spatially resolved determination of the refractive power distribution of an optical element (1; 201; 701),

   - having a light source unit (213, 215, 217) for illuminating the optical element (1; 201; 701) with an expanded ray pencil (3; 203; 703),
   - having a beam transformer (5; 205; 305; 505; 605; 705) for producing a first number of beams (219),
   - having a spatially resolving detector (11; 211; 711), and
   - having an arithmetic unit (743), wherein

   a manipulator (7; 207; 407; 707) is arranged upstream or downstream of the beam transformer (5; 205; 305; 505; 606; 705), wherein
   the manipulator can be actuated, wherein the combination of beam transformer (5; 205; 305; 505; 605; 705) and manipulator (7; 207; 407; 707) is transparent only to a second number of beams (221), and wherein the second number is smaller than the first number but greater than one, **characterized in that** the manipulator (7; 207; 407; 707) is an exchangeable pinhole diaphragm (7; 207; 407; 707), **in that** a module (9; 747) is provided for changing the exchangeable pinhole diaphragm (7; 207; 407; 707) and **in that** a magazine (745) with several exchangeable pinhole diaphragms (7; 207; 407; 707) with different hole arrangements is provided and the exchangeable pinhole diaphragms (7; 207; 407; 707) can be interchanged in a manner controlled by the arithmetic unit (743).

2. Device according to Claim 1, **characterized in that** the hole arrangement of the exchangeable pinhole diaphragm (7; 207; 407; 707) is matched to the refractive power distribution of the optical element (1; 201; 701) such that the second number of beams (221) on the entrance surface of the detector (11; 211; 711) produces the same number of physically separate intensity peaks (225) as the second number.

3. Device according to Claim 2, **characterized in that** the number of the physically separate intensity peaks (225) on the entrance surface of the detector (11; 211; 711) is greater than one hundred.

4. Device according to one of the preceding claims, **characterized in that** the manipulator (7; 207; 407; 707) is arranged directly upstream or downstream of the beam transformer (5; 205; 305; 505; 605; 705).

5. Device according to one of the preceding claims, **characterized in that** the beam transformer (5; 205; 305; 505; 605; 705) is a pinhole diaphragm (5; 205; 305; 505; 605; 705) or a lens array.

6. Device according to Claim 5, **characterized in that** the minimum hole spacing of the first pinhole diaphragm (5; 205; 305; 505; 605; 705) is so large that the first number of beams (219) produces the same number of physically separate intensity peaks (225) as the first number on the entrance surface of the detector (11; 211; 711) in the case of an optical element (1; 201; 701) not lying in the beam path, and in the case of a manipulator (7; 207; 407; 707) not lying in the beam path.

7. Device according to Claim 6, **characterized in that** the hole spacing on the pinhole diaphragm (5; 205; 305; 505; 605; 705) accounts for at most 1/30, preferably 1/50, of the lateral expansion of that region of the optical element (1; 201; 701) which is to be investigated.

8. Device according to one of Claims 5 to 7, **characterized in that** the second number of beams (221) is limited exclusively by the holes (327; 527; 627) of the pinhole diaphragm (5; 205; 305; 505; 605; 705).

9. Device according to Claim 8, **characterized in that** the holes (327; 527; 627) of the pinhole diaphragm (5; 205; 305; 505; 605; 705) have a first diameter and the holes (431) of the exchangeable pinhole diaphragm (7; 207; 407; 707) have a second diameter and **in that** the lateral positioning accuracy of the exchangeable pinhole diaphragm (7; 207; 407; 707) with respect to the pinhole diaphragm (5; 205; 305; 505; 605; 705) is less than the difference in absolute terms between the first and second diameters.

10. Device according to one of Claims 1 to 9, **characterized in that** a module (735) for changing the optical element (1; 201; 701) is provided.

11. Device according to one of the preceding claims, **characterized in that** the light source unit (213, 215, 217) contains an effective, nearly point-like light source (213, 215).

12. Device according to one of the preceding claims, **characterized in that** the optical element (1; 201; 701) is illuminated by a nearly plane wave (3; 203; 703).

13. Device according to one of the preceding claims, **characterized in that** the beam transformer (5; 205; 305; 505; 605; 705) and the manipulator (7; 207; 407; 707) are arranged downstream of the optical element (1; 201; 701) and **in that** the detector (11; 211; 711) follows the beam transformer (5; 205; 305; 505; 605; 705) and the manipulator (7; 207; 407; 707) without the interposition of further transparent elements.

14. Device according to one of the preceding claims, **characterized in that** the detector (11; 211; 711) has a first lateral expansion and that region of the optical element (1; 201; 701) which is to be investigated has a second lateral expansion, and **in that** the first lateral expansion is greater than the second lateral expansion.

15. Device according to one of Claims 5 to 14, **characterized in that** the light source (213) produces light within the wavelength range $\lambda_0 \pm \Delta\lambda$ and the pinhole diaphragm (5; 205; 305; 505; 705) and the exchangeable pinhole diaphragm (7; 207; 407; 707) are antireflection coated for the wavelength range $\lambda_0 \pm \Delta\lambda$.

16. Method for spatially resolved determination of the refractive power distribution of an optical element (1; 201; 701), wherein

   - the optical element (1; 201; 701) is illuminated with an expanded beam pencil (3; 203; 703),
   - a first number of beams (219) is produced,
   - the first number of beams (219) is reduced to a second number of beams (221), the second number being greater than one,
   - physically separate intensity peaks (225) are detected using a spatially resolving detector (11; 211; 711), the number of the physically separate intensity peaks (225) being equal to the second number of beams (221),
   - the refractive power distribution of the optical element (1; 201; 701) is calculated using an arithmetic unit (743),

   **characterized in that** the reduction is carried out by a manipulator (7; 207; 407; 707), wherein the manipulator (7;

207; 407; 707) is a pinhole diaphragm (7; 207; 407; 707), wherein the pinhole diaphragm (7; 207; 407; 707) is exchanged.

17. Method according to Claim 16, **characterized in that** the optical element (1; 201; 701) is exchanged.

18. Method according to one of Claims 16 or 17, **characterized**
**in that** it is applied in the testing of various optical elements (1; 201; 701) with known predetermined refractive power distribution,
**in that** a stored desired refractive power distribution is assigned to the optical element (1; 201; 701) via a signal to the arithmetic unit (743) during installation of the optical element (1; 201; 701),
**in that** the arithmetic unit (743) actuates the manipulator (7; 207; 407; 707) in order to reduce the light bundles,
**in that** the position of the intensity peaks (225) is measured, and
**in that** the actual refractive power distribution is determined using the arithmetic unit (743).

19. Method according to one of Claims 16 to 18, **characterized**
**in that** a measurement is carried out for the optical element (1; 201; 701) by a first actuation of the manipulator (7; 207; 407; 707),
**in that** at least one further measurement is carried out by a second actuation of the manipulator (7; 207; 407; 707), wherein the manipulator (7; 207; 407; 707) respectively transmits different beams, and
**in that** the actual refractive power distribution of the optical element (1; 201; 701) is determined from the measurements.

**Revendications**

1. Dispositif pour la détermination à résolution spatiale de la répartition de la puissance de réfraction d'un élément optique (1; 201; 701)

- avec une unité de source de lumière (213, 215, 217) pour l'éclairage de l'élément optique (1 ; 201 ; 701) avec un faisceau de rayons étendu (3 ; 203 ; 703),
- avec un convertisseur de rayons (5 ; 205 ; 305 ; 505 ; 605 ; 705) pour la réalisation d'un premier nombre de faisceaux de rayons (219),
- avec un détecteur à résolution spatiale (11; 211 ; 711)
- avec une unité de calcul (743), dans lequel

un manipulateur (7 ; 207 ; 407 ; 707) est placé devant ou derrière le convertisseur de rayons (5 ; 205 ; 305 ; 505 ; 605 ; 705), dans lequel
le manipulateur peut être actionné, la combinaison du convertisseur de rayons (5 ; 205 ; 305 ; 505 ; 605 ; 705) et du manipulateur (7 ; 207 ; 407 ; 707) permettant ainsi de laisser passer un deuxième nombre de faisceaux de rayons (221), et le deuxième nombre étant inférieur au premier nombre, mais supérieur à un, **caractérisé en ce que** le manipulateur (7 ; 207 ; 407 ; 707) est constitué d'un sténopé interchangeable (7 ; 207 ; 407 ; 707), **en ce qu'**un module (9 ; 747) est prévu pour le remplacement du sténopé interchangeable (7 ; 207 ; 407 ; 707), et **en ce qu'**un magasin (745) comprenant plusieurs sténopés interchangeables (7 ; 207 ; 407 ; 707) avec différentes dispositions de trous est prévu, et **en ce que** les sténopés interchangeables (7 ; 207 ; 407 ; 707) peuvent être échangés en étant commandés au moyen de l'unité de calcul (743).

2. Dispositif selon la revendication 1, **caractérisé en ce que** la disposition des trous des sténopés interchangeables (7 ; 207 ; 407 ; 707) est adaptée à la puissance de réfraction de l'élément optique (1 ; 201 ; 701) de telle sorte que le deuxième nombre de faisceaux de rayons (221) produit le même nombre de pics d'intensité séparés dans l'espace (225) sur la surface d'entrée du détecteur (11 ; 211 ; 711) que le deuxième nombre.

3. Dispositif selon la revendication 2, **caractérisé en ce que** le nombre des pics d'intensité séparés dans l'espace (225) sur la surface d'entrée du détecteur (11, 211, 711) est supérieur à cent.

4. Dispositif selon l'une des précédentes revendications, **caractérisé en ce que** le manipulateur (7 ; 207 ; 407 ; 707) est placé immédiatement avant ou après le convertisseur de rayons (5 ; 205 ; 305 ; 505 ; 605 ; 705).

5. Dispositif selon l'une des précédentes revendications, **caractérisé en ce que** le convertisseur de rayons (5 ; 205 ;

305 ; 505 ; 605 ; 705) est constitué d'un sténopé (5 ; 205 ; 305 ; 505 ; 605 ; 705) ou d'un système de lentilles.

6. Dispositif selon la revendication 5, **caractérisé en ce que** l'écart minimal entre les trous du premier sténopé (5 ; 205 ; 305 ; 505 ; 605 ; 705) est assez grand pour que le premier nombre de faisceaux de rayons (219) produise le même nombre de pics d'intensité séparés dans l'espace (225) sur la surface d'entrée du détecteur (11 ; 211 ; 711) que le premier nombre, lorsque ni l'élément optique (1 ; 201 ; 701) ni le manipulateur (7 ; 207 ; 407 ; 707) ne se trouvent sur le trajet des rayons.

7. Dispositif selon la revendication 6, **caractérisé en ce que** l'écart entre les trous sur le sténopé (5 ; 205 ; 305 ; 505 ; 605 ; 705) mesure au maximum 1/30, préférentiellement 1/50 de l'étirement latéral de la zone à examiner de l'élément optique (1 ; 201 ; 701).

8. Dispositif selon l'une des revendications 5 à 7, **caractérisé en ce que** le deuxième nombre de faisceaux de rayons (221) est exclusivement délimité par les trous (327 ; 527 ; 627) du sténopé (5 ; 205 ; 305 ; 505 ; 605 ; 705).

9. Dispositif selon la revendication 8, **caractérisé en ce que** les trous (327 ; 527 ; 627) du sténopé (5 ; 205 ; 305 ; 505 ; 605 ; 705) comportent un premier diamètre et les trous (431) du sténopé interchangeable (7 ; 207; 407; 707) comportent un deuxième diamètre et **en ce que**
la précision de positionnement latéral du sténopé interchangeable (7 ; 207 ; 407 ; 707) par rapport au sténopé (5 ; 205 ; 305 ; 505 ; 605 ; 705) est inférieure à la différence entre le premier et le deuxième diamètre.

10. Dispositif selon l'une des revendications 1 à 9, **caractérisé en ce qu'**un module (735) est prévu pour le remplacement de l'élément optique (1 ; 201 ; 701).

11. Dispositif selon l'une des précédentes revendications, **caractérisé en ce que** l'unité de source de lumière (213, 215, 217) contient une source de lumière (213, 215) effective approximativement en forme de point.

12. Dispositif selon l'une des précédentes revendications, **caractérisé en ce que** l'élément optique (1 ; 201 ; 701) est éclairé par une onde (3 ; 203 ; 703) à peu près plate.

13. Dispositif selon l'une des précédentes revendications, **caractérisé en ce que** le convertisseur de rayons (5 ; 205 ; 305 ; 505 ; 605 ; 705) et le manipulateur (7 ; 207 ; 407 ; 707) sont disposés à la suite de l'élément optique (1 ; 201 ; 701) et **en ce que** le détecteur (11 ; 211 ; 711) est placé à la suite du convertisseur de rayons (5 ; 205 ; 305 ; 505 ; 605 ; 705) et du manipulateur (7; 207; 407 ; 707), sans intercalation d'autres éléments transparents.

14. Dispositif selon l'une des précédentes revendications, **caractérisé en ce que** le détecteur (11 ; 211 ; 711) comporte une première extension latérale et la zone à examiner de l'élément optique (1 ; 201 ; 701) comporte une deuxième extension latérale, et **en ce que** la première extension latérale est supérieure à la deuxième extension latérale.

15. Dispositif selon l'une des revendications 5 à 14, **caractérisé en ce que** la source de lumière (213) produit de la lumière dans la zone de longueurs d'ondes $\lambda_o \pm \Delta\lambda$, et **en ce que** le sténopé (5 ; 205 ; 305; 505; 705) et le sténopé interchangeable (7; 207 ; 407 ; 707) ont reçu un traitement anti-reflets pour la zone de longueurs d'ondes $\lambda_o \pm \Delta\lambda$.

16. Procédé pour la détermination à résolution spatiale de la répartition de la puissance de réfraction d'un élément optique (1 ; 201 ; 701), dans lequel

- l'élément optique (1 ; 201 ; 701) est éclairé par un faisceau de rayons étendu (3 ; 203 ; 703),
- un premier nombre de faisceaux de rayons (219) est produit,
- le premier nombre de faisceaux de rayons (219) est réduit à un deuxième nombre de faisceaux de rayons (221), le deuxième nombre étant supérieur à un,
- des pics d'intensité séparés dans l'espace (225) sont captés par un détecteur à résolution spatiale (11 ; 211 ; 711), le nombre de pics d'intensité séparés dans l'espace (225) étant égal au deuxième nombre de faisceaux de rayons (221),
- la répartition de la puissance de réfraction de l'élément optique (1 ; 201 ; 701) est calculée à l'aide d'une unité de calcul (743), **caractérisé en ce que** la réduction est effectuée au moyen d'un manipulateur (7 ; 207 ; 407 ; 707), le manipulateur (7 ; 207 ; 407 ; 707) étant constitué d'un sténopé (7 ; 207 ; 407 ; 707), le sténopé (7 ; 207 ; 407 ; 707) pouvant être remplacé.

**17.** Procédé selon la revendication 16, **caractérisé en ce que** l'élément optique (1 ; 201 ; 701) peut être remplacé.

**18.** Procédé selon l'une des revendications 16 ou 17, **caractérisé en ce qu'**il est mis en oeuvre lors du contrôle de différents éléments optiques (1 ; 201 ; 701) avec une répartition théorique connue de la puissance de réfraction,

**en ce que** lors du montage de l'élément optique (1 ; 201 ; 701), l'attribution à l'élément optique (1 ; 201 ; 701) d'une répartition théorique de la puissance de réfraction enregistrée est effectuée au moyen d'un signal envoyé à l'unité de calcul (743),

**en ce que** l'unité de calcul (743) commande le manipulateur (7 ; 207 ; 407 ; 707) pour la réduction des faisceaux lumineux,

**en ce que** la position des pics d'intensité (225) est mesurée, et

**en ce que** la répartition effective de la puissance de réfraction est déterminée à l'aide de l'unité de calcul (743).

**19.** Procédé selon l'une des revendications 16 à 18, **caractérisé en ce qu'**une mesure est prise pour l'élément optique (1 ; 201 ; 701) au moyen d'une première commande du manipulateur (7 ; 207 ; 407 ; 707),

**en ce qu'**au moins une autre mesure est prise à l'aide d'une deuxième commande du manipulateur (7 ; 207 ; 407 ; 707), le manipulateur (7 ; 207 ; 407 ; 707) laissant passer à chaque fois d'autres faisceaux de rayons, et

**en ce que** la répartition effective de la puissance de réfraction de l'élément optique (1 ; 201 ; 701) est déterminée à partir des mesures prises.

FIG.1

## FIG.2

EP 1 136 806 B1

FIG.3

d₁ ... 305

327

329

r₁

FIG.4

d₂

407

431

r₂

_FIG.5_

_FIG.6_

FIG.7

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0039497 A
- DE 3318293 A1
- WO 9534800 A
- US 5825476 A
- DE 19800844 A1
- EP 0466881 B1

### In der Beschreibung aufgeführte Nicht-Patentliteratur

- Optical Shop Testing, Kap. 10 I. Ghozeil. **D. MALACARA.** Hartmann and Other Screen Tests. Wiley, 1978
- **D.MALACARA et al.** Testing and centering of lenses by means of a hartmann test with four holes. *OPTICAL ENGENEERING,* 07. Juli 1992, vol. 31, 1551-1555